Europäisches Patentamt

**European Patent Office**

**Office européen des brevets**

(11) Numéro de publication: **0 165 843**
**A1**

## (12) DEMANDE DE BREVET EUROPEEN

(21) Numéro de dépôt: **85400968.5**

(22) Date de dépôt: **15.05.85**

(51) Int. Cl.⁴: **H 02 M 7/797**
**H 02 J 9/06**

(30) Priorité: **17.05.84 FR 8407667**

(43) Date de publication de la demande:
**27.12.85 Bulletin 85/52**

(84) Etats contractants désignés:
**AT BE CH DE GB IT LI LU NL SE**

(71) Demandeur: **Noé, Michel**
**53 rue Boisnet**
**F-49000 Angers(FR)**

(72) Inventeur: **Noé, Michel**
**53 rue Boisnet**
**F-49000 Angers(FR)**

(74) Mandataire: **Phélip, Bruno et al,**
**c/o Cabinet Harlé & Phélip 21, rue de la Rochefoucauld**
**F-75009 Paris(FR)**

(54) Convertisseur réversible de courant, et alimentation de secours le comprenant.

(57) L'invention concerne les convertisseurs de courant continu-alternatif.

Elle se rapporte à un convertisseur dans lequel un circuit (11) transmet un courant continu d'entrée à une fréquence porteuse (FP), modulé à une fréquence de découpage (FD), à un transformateur (12). Un circuit (13) de sortie reconstitue une forme d'onde de sortie. Selon l'invention, le circuit de sortie (13) comporte des interrupteurs bidirectionnels commandés, si bien que le convertisseur est réversible et peut aussi être utilisé en redresseur.

Application à la réalisation d'alimentations électriques de secours.

FIG. 1

EP 0 165 843 A1

Convertisseur réversible de courant, et
alimentation de secours le comprenant

1

La présente invention concerne les convertisseurs
de courant, et plus précisément un convertisseur réversible,
capable de transformer un courant continu en un courant
alternatif à une fréquence de sortie et inversement de transformer un tel courant alternatif en un courant continu.
Elle concerne aussi une alimentation de secours comprenant
un tel convertisseur.

Les convertisseurs de courant sont des appareils
bien connus et très utilisés dans de nombreuses techniques.
En général, ces convertisseurs ne sont pas réversibles,
c'est-à-dire qu'ils sont utilisés soit pour la formation
d'un courant alternatif à partir d'un courant continu
(on les appelle alors parfois "onduleurs"), soit pour
la formation d'un courant continu à partir d'un courant
alternatif (on les appelle alors en général "redresseurs").

On connaît aussi déjà des convertisseurs de
courant dans lesquels la transformation du courant est
effectuée dans un transformateur qui travaille à une fréquence porteuse bien supérieure à la fréquence du courant
alternatif voulu. Cette dernière est obtenue par modulation du courant d'alimentation du primaire. De tels onduleurs
sont très avantageux car ils ont un encombrement réduit.
Par exemple, le brevet des Etats-Unis d'Amérique n° 4348719
(Hichs) décrit un tel convertisseur qui ne fonctionne qu'en
ondulateur.

L'inconvénient de ces onduleurs est qu'ils ne
constituent pas des convertisseurs réversibles. On connaît
cependant déjà des convertisseurs de courant de type réversible. En général, ces convertisseurs ne sont pas du type
dans lequel le transformateur travaille à une fréquence
porteuse. On a cependant déjà proposé la réalisation de
convertisseurs de courant continu ayant un transformateur
travaillant à une fréquence porteuse et pourtant réversibles. Cependant, cette réversibilité est obtenue à l'aide
de circuits très complexes qui ne présentent pas une fiabilité suffisante, si bien que ces convertisseurs ne peuvent
pas être en général utilisés dans les applications industrielles.

2

L'invention concerne un convertisseur de courant du type dans lequel le transformateur travaille à une fréquence porteuse et qui est cependant réversible. Cette réversibilité est obtenue par utilisation de composants électroniques extrêmement simples et très fiables.

Plus précisément, l'invention concerne un convertisseur de courant destiné à transformer un courant continu en un courant alternatif à une fréquence de sortie, du type qui comprend :

- un premier circuit destiné à découper le courant continu à une fréquence porteuse très supérieure à la fréquence de sortie, et à moduler la tension à une fréquence double de la fréquence de sortie, par découpage du courant à une fréquence de découpage très supérieure à la fréquence porteuse,

- un transformateur destiné à recevoir, à son primaire, le courant découpé et modulé du premier circuit et à travailler à la fréquence porteuse, le rapport de transformation étant tel que le secondaire transmet un courant dont la tension a une valeur efficace ou une valeur moyenne voulue, et

- un second circuit destiné à recevoir le courant du secondaire du transformateur et à former un courant ayant une tension sinusoïdale à la fréquence voulue de sortie. Selon l'invention, ce convertisseur est réversible, cette caractéristique étant obtenue par réalisation du second circuit à l'aide d'interrupteurs bidirectionnels commandés à la fréquence porteuse.

Le convertisseur comporte avantageusement un générateur de signaux à la fréquence porteuse qui est destiné à alimenter le premier circuit et le second circuit afin que la commande des interrupteurs bidirectionnels du second circuit soient en phase avec la commande du primaire du transformateur à la fréquence porteuse. A cet effet, le premier circuit comporte avantageusement des interrupteurs électroniques eux-mêmes commandés à la fréquence porteuse.

3

Le convertisseur comporte aussi avantageusement un générateur de signaux de découpage à une fréquence de découpage très supérieure à la fréquence porteuse et destiné à alimenter le premier circuit.

Le premier circuit peut être de différents types et par exemple peut être un circuit en pont, en demi-pont ou de type push-pull.

Le second circuit, comprenant les interrupteurs bidirectionnels commandés, peut être réalisé sous forme d'un montage à point milieu ou d'un montage de reconstitution à double alternance.

L'invention concerne aussi des alimentations de secours. Une telle alimentation comporte avantageusement un interrupteur monté entre une entrée de courant alternatif et une sortie, un circuit logique de commande destiné à manoeuvrer l'interrupteur lors de la détection de la disparition d'un courant à l'entrée, un convertisseur selon l'invention, associé à une batterie d'accumulateurs, et un circuit de régulation du convertisseur, destiné à recevoir le courant de sortie du convertisseur.

D'autres caractéristiques et avantages de l'invention ressortiront mieux de la description qui va suivre, faite en référence aux dessins annexés sur lesquels :

la figure 1 est un diagramme synoptique représentant les principaux éléments d'un convertisseur réversible de courant selon l'invention ;

la figure 2 est un schéma représentant les principaux éléments du premier circuit du convertisseur de la figure 1 ;

la figure 3 représente une variante du circuit de la figure 2 ;

les figures 4a à 4d sont des schémas représentant la réalisation d'interrupteurs bidirectionnels commandés utilisés dans le second circuit du convertisseur selon l'invention ;

la figure 5 est un schéma représentant le symbole utilisé pour la représentation, sur les figures suivantes,

4

des interrupteurs bidirectionnels commandés ;

la figure 6a est un schéma du second circuit du convertisseur représenté sur la figure 1 ;

la figure 6b est une variante du second circuit du convertisseur de la figure 1 ;

la figure 7 est un diagramme des temps représentant diverses formes d'onde observées dans différents circuits du convertisseur de la figure 1 ;

la figure 8 est un diagramme synoptique d'une alimentation de secours réalisée selon l'invention ; et

la figure 9 est un schéma représentant les parties essentielles d'un autre mode de réalisation d'alimentation de secours.

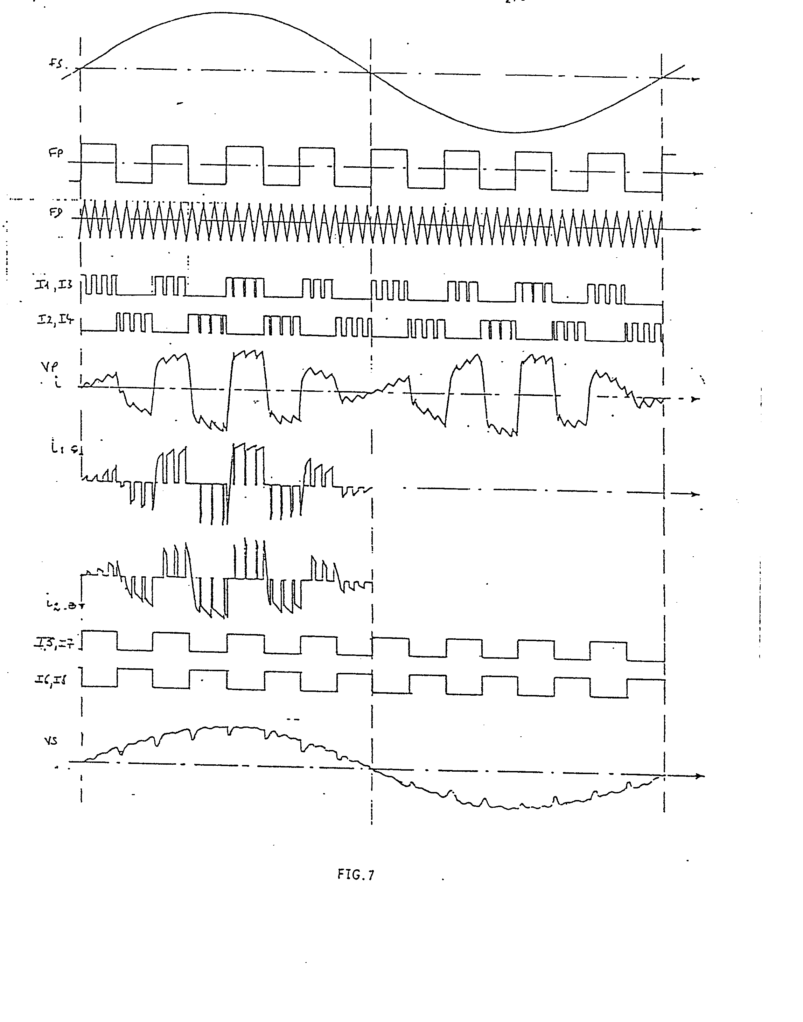

Avant la description du convertisseur selon l'invention, il est utile de considérer les différentes fréquences mises en oeuvre dans celui-ci. On se réfère à cet effet aux trois courbes supérieures de la figure 7. La première courbe représente une forme d'onde à la fréquence de sortie FS, qui est en général de 50 Hz, mais qui peut être difféente, par exemple 60 Hz. La seconde courbe représente la fréquence porteuse FP qui est en général supérieure de 10 à 100 fois à la fréquence de sortie FS. La troisième courbe représente un signal à la fréquence de découpage FD qui est elle-même supérieure de 10 à 500 fois à la fréquence porteuse. Bien entendu, sur les trois courbes de la figure 7, les rapports entre les différentes fréquences ne sont pas aussi élevés afin que la représentation soit lisible.

Dans un convertisseur selon l'invention, une tension continue est découpée à la fréquence porteuse et à la fréquence de découpage. Le découpage à la fréquence porteuse FP transforme le courant qui a une tension continue en un courant à tension alternative destiné à alimenter un transformateur. Celui-ci travaille à la fréquence FP, c'est-à-dire qu'il est magnétisé dans un sens puis dans l'autre à cette fréquence. L'amplitude de la magnétisation ou du courant magnétisant n'est cependant pas constante, car le découpage à la fréquence FD assure une modulation de la tension afin que la tension de sortie soit régulée à la fréquence de sortie FS. En réalité, la modulation doit être effectuée en général au double de la fréquence de sortie afin que le courant obtenu à la sortie du convertisseur ait la fréquence de sortie.

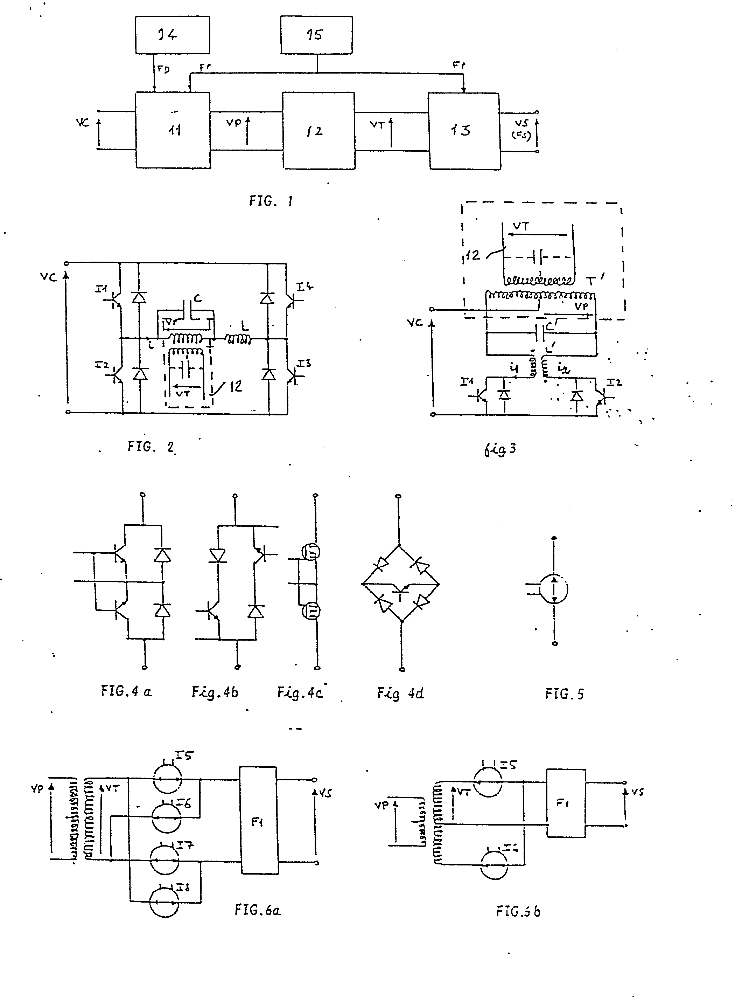

La figure 1 représente les principaux éléments d'un convertisseur réversible de courant selon l'invention. Sur cette figure 1, la référence 11 désigne un premier circuit destiné à assurer le découpage à la fréquence porteuse FP et à la fréquence de découpage FD. La référence 12 désigne un transformateur de courant, et la référence 13 un circuit destiné à mettre sous forme sinusoïdale à la fréquence de sortie le courant modulé à la fréquence FP transmis par le secondaire du transformateur 12. Le convertisseur comporte en outre un générateur 14 de signaux à la fréquence de découpage et un générateur 15 de signaux à la fréquence porteuse.

On considère maintenant, en référence à la figure 2, un mode de réalisation du premier circuit 11. Ce circuit est destiné à découper le courant continu VC qu'il reçoit à son entrée, à moduler ce courant par découpage à la fréquence de découpage FD afin que le courant soit modulé à une fréquence égale au double de la fréquence voulue de sortie, et à réguler cette tension de sortie FS, par le découpage à la fréquence de découpage.

Le courant continu VC reçu à l'entrée parvient à un pont formé par des interrupteurs électroniques I1, I2, I3 et I4 constitués chacun d'un transistor. Une diode est montée en parallèle et en sens inverse par rapport à chaque transistor. Bien qu'on ait représenté des transistors bipolaires, ceux-ci peuvent être de différents types, par exemple des transistors à effet de champ. Le premier circuit 11 comporte en outre une self L et un condensateur C qui constituent un filtre. Cependant, le condensateur peut aussi être monté au secondaire du transformateur 12, comme indiqué en traits interrompus. Le courant i est transmis par le pont des interrupteurs électroniques au primaire du transformateur dont la tension est VP. La tension secondaire du transformateur est VT. La figure 7 représente les courants de commande des interrupteurs I1, I3 d'une part et I2, I4 d'autre part. En effet, ces interrupteurs sont commandés par paires. Il faut cependant noter que l'échelle des temps est faussée afin que la compréhension de l'invention soit facilitée. Les courants représentés correspondent à l'alimentation d'une charge résistive, bien que le convertisseur permette l'alimentation de charges de tout type, ayant un cosinus φ quelconque. Lorsque les interrupteurs I1 et I3 sont commandés, la tension VC est appliquée aux bornes du transformateur et de la self et, lorsque les interrupteurs I2 et I4 sont commandés, c'est la tension - VC qui leur est appliquée. Les signaux de commande peuvent être formés par exemple par comparaison entre un signal en dents de scie (à la fréquence de découpage FD) et une sinusoïde (à la fréquence FS), puis par transmission alternative (à la fréquence porteuse FP) aux deux voies I1, I3 d'une part et I2, I4 d'autre part. La figure 7 représente la tension VP obtenue ainsi aux bornes du primaire du transformateur, dans le cas d'une charge résistive reliée au secondaire. La forme d'onde représentée indique schématiquement le découpage à la fréquence FP et la modulation à la fréquence double de la fréquence de sortie FS.

Le filtre constitué par la self L et le condensateur C ne laisse qu'une certaine ondulation à la fréquence de découpage FD, avec une amplitude qui peut être faible ou importante à volonté (entre 1 et 100 % de la valeur crête du courant par exemple). Il est avantageux que le filtre atténue la composante alternative à la fréquence de découpage FD, en atténuant au minimum la composante à la fréquence porteuse FP car une telle atténuation provoquerait une perte de puissance. A cet effet, la fréquence de découpage FD doit être un multiple suffisamment élevé de la fréquence porteuse FP pour que la fréquence de coupure

7

FO du filtre puisse être comprise entre les deux fréquences FP et FD. Dans un mode de réalisation avantageux, la fréquence de coupure FO du filtre est égale à 10 fois la fréquence porteuse FP, et la fréquence de découpage FD est égale à 10 fois la fréquence de coupure FO.

Bien que la figure 2 représente un circuit en pont, un circuit en demi-pont peut aussi être utilisé. Dans ce cas, les interrupteurs I3 et I4 de la figure 2 sont remplacés par des condensateurs. Le circuit comprenant le transformateur et le filtre reçoit alors la tension VC/2 ou la tension - VC/2, suivant la commande des interrupteurs I1 et I2. Par ailleurs, le fonctionnement est analogue à celui du circuit de la figure 2.

La figure 3 représente une autre variante de montage de type push-pull. Il s'agit d'une variante classique bien connue des hommes du métier. Dans ce cas, le primaire du transformateur P' comprend deux demi-enroulements. Les courants $i_1$ et $i_2$ qui circulent dans les deux demi-enroulements sont représentés sur la figure 7. L'inductance L' assure le transfert du courant d'un demi-enroulement à l'autre à la fréquence FD. Le fonctionnement est par ailleurs analogue à celui qu'on a décrit en référence à la figure 2. Bien entendu, les interrupteurs électroniques doivent être adaptés aux tensions et courants différents qui leur sont alors transmis.

Le transformateur 12 représenté sur la figure 2 ne comporte aucun point milieu. Cependant, suivant le montage particulier utilisé pour les circuits 11 et 13, le transformateur peut être de différents types. Ainsi, dans la variante de la figure 3, le transformateur a un primaire à un point milieu. Dans le mode de réalisation décrit dans la suite en référence à la figure 6b, le secondaire du transformateur a un point milieu. Lorsque l'un des enroulements a un point milieu, il est souhaitable que les deux demi-enroulements associés soient bobinés ensemble afin que le couplage soit optimal.

On considère maintenant le circuit 13 de la

8

figure 1, c'est-à-dire le circuit destiné à remettre en forme la tension de sortie du transformateur afin qu'il forme la tension de sortie VS du convertisseur. Selon l'invention, l'opération est réalisée à l'aide d'interrupteurs électroniques bidirectionnels commandés.

Les interrupteurs électroniques bidirectionnels commandés sont tels que, lorsqu'ils sont commandés, ils laissent passer le courant dans un sens ou dans l'autre, suivant la différence de potentiel instantanée appliqué à leurs bornes. La conduction peut être interrompue par la commande. De tels interrupteurs bidirectionnels peuvent être réalisés de diverses manières, avec des transistors et des diodes en particulier. Les figures 4a et 4b représentent des commutateurs bidirectionnels constitués par des transistors bipolaires et des diodes. La figure 4c représente un interrupteur bidirectionnel formé par deux transistors à grille isolée. La figure 4d représente un interrupteur bidirectionnel commandé constitué par un transistor et quatre diodes. Tous ces types d'interrupteurs bidirectionnels électroniques sont représentés, sur les figures 6a et 6b, par le symbole indiqué sur la figure 5.

Le circuit 13 est avantageusement réalisé comme représenté sur la figure 6a. Celui-ci restitue la tension de sortie en double alternance. Il comporte quatre interrupteurs bidirectionnels commandés I5 à I8. Les interrupteurs I5 et I7 sont commandés simultanément, et les interrupteurs I6 et I8 aussi. Les commandes s'effectuent à la fréquence porteuse FP. Les signaux de commande sont indiqués sur la figure 7. Pendant une demi-période du signal à la fréquence porteuse FP, la tension VT au secondaire du transformateur est directement transmise à la sortie alors que, pendant la demi-période suivante, la tension VT est inversée et forme la tension VS. Un filtre de sortie F1 peut être incorporé afin qu'il réduise l'amplitude des perturbations dues à l'inductance du primaire (le filtre peut comprendre par exemple une inductance montée en série avec la sortie et un condensateur monté en parallèle avec la sortie). En

9

effet, l'inductance du primaire (L ou L' des figures 2 et 3) inverse le courant à la fréquence FP. Comme l'inductance emmagasine une certaine quantité d'énergie au moment de l'inversion du courant, cette énergie est perdue et crée une perturbation dans la tension instantanée de sortie. L'amplitude de cette perturbation dépend de la valeur de l'inductance du primaire, donc du rapport entre les différentes fréquences de découpage, de coupure et porteuse. Le filtre réduit ou supprime ces perturbations lorsqu'elles sont excessives.

La figure 6b représente une variante de circuit qui ne comporte plus que deux interrupteurs bidirectionnels I5 et I6. Le fonctionnement est identique à celui qu'on a décrit en référence à la figure 6a, les commutateurs étant commandés comme l'indiquent les formes d'onde de la figure 7.

Les générateurs 14 et 15 sont des circuits bien connus des hommes du métier, l'un étant simplement destiné à former un signal à la fréquence de découpage FD et l'autre un signal à la fréquence porteuse FP. On ne les décrit donc pas en détail.

Le convertisseur selon l'invention est bidirectionnel, car l'énergie peut circuler d'un courant continu à un courant alternatif ou inversement. Le convertisseur joue donc le rôle d'un redresseur ou d'un onduleur. Ces deux fonctions sont nécessaires dans une alimentation de secours : une batterie d'accumulateurs doit être rechargée et maintenue en charge à partir du courant du réseau, mais un courant alternatif doit être transmis, à partir de l'énergie emmagasinée dans la batterie d'accumulateurs, lorsque le courant du réseau est défaillant. En général, les alimentations de secours comportent deux convertisseurs, alors que les deux fonctions ne sont pas simultanées en pratique. En effet, la fonction "redresseur" n'est utile qu'en présence du courant du réseau alors que la fonction "onduleur" n'est utile qu'en cas de défaillance du courant du réseau.

0165843

10

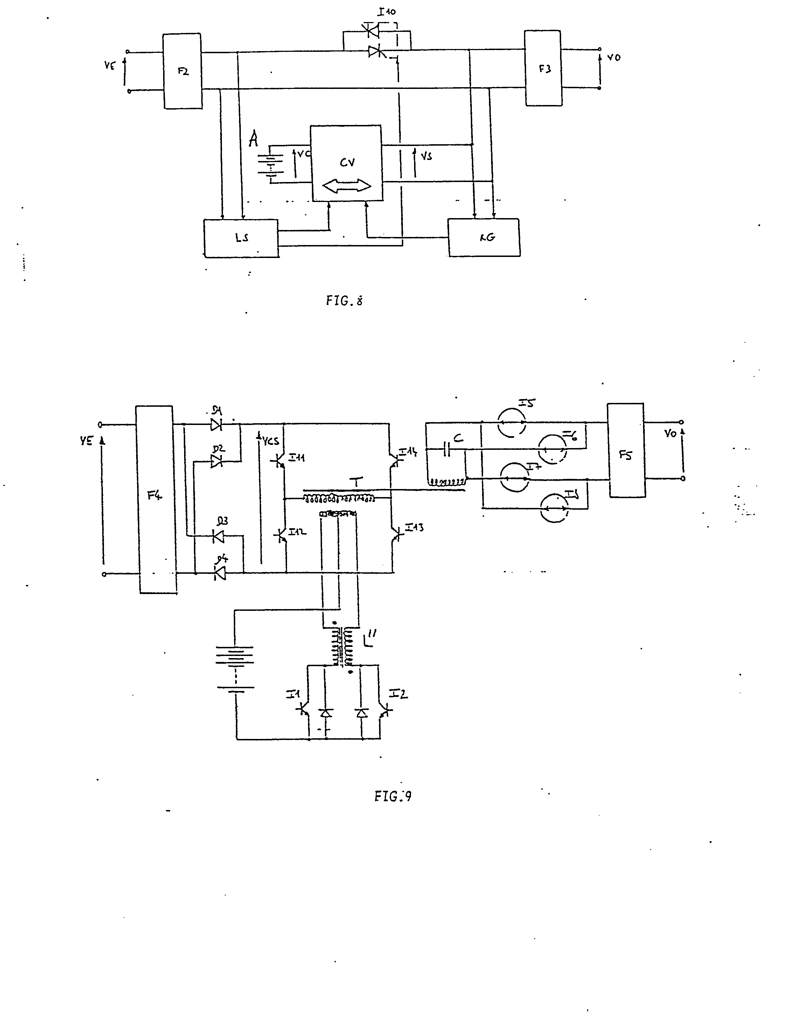

La figure 8 représente un exemple d'alimentation de secours comportant un convertisseur selon l'invention. La tension d'alimentation VE d'un réseau alternatif est transmise à un filtre éventuel F2. Cette tension est normalement transmise à une sortie VO par l'intermédiaire d'un autre filtre F3.

Un interrupteur commandé I10 est monté entre l'entrée et la sortie et il est sous la commande d'un circuit logique LS ; le convertisseur CV selon l'invention fonctionne normalement en redresseur par recharge et maintien en charge des batteries d'accumulateurs A. Le convertisseur CV reçoit alors le courant du réseau. Cependant, en cas de disparition du courant du réseau, le circuit logique LS commande l'interrupteur I10 et le convertisseur. Celui-ci fournit alors un courant alternatif à partir de l'énergie emmagasinée dans la batterie d'accumulateurs A. Un circuit RG de régulation assure la synchronisation du signal sinusoïdal de sortie du convertisseur et du signal du réseau. Bien entendu, le dispositif de régulation RG peut remplir des fonctions auxiliaires telles que la limitation du courant tant que la batterie d'accumulateur n'est pas rechargée, la régulation de la tension de la batterie d'accumulateurs afin qu'elle reste à pleine charge, et la régulation de la tension de sortie VS dès que la tension du réseau disparaît.

L'interrupteur I10 est destiné à s'ouvrir rapidement lorsque la tension du réseau disparaît. Il peut être constitué par deux thyristors, par un commutateur bidirectionnel commandé ou par un interrupteur bidirectionnel, par exemple de l'un des types représentés sur les figures 4a à 4d. En outre, bien qu'on ait représenté un interrupteur sur une phase seulement, un autre interrupteur analogue peut être monté sur l'autre phase. Les filtres éventuels F2 et F3 sont simplement destinés à compenser les conséquences des microcoupures ou des variations transitoires rapides de la tension du réseau.

Dans l'alimentation de secours décrite précédem-

11

ment, la tension de sortie n'est pas régulée à une valeur déterminée lorsque le réseau est présent. La figure 9 représente une variante d'alimentation de secours qui assure cette régulation. Le courant VE du réseau, après passage dans un filtre F4, est redressé par des diodes D1 à D4. La tension obtenue VCS est alors découpée à la fréquence porteuse par des interrupteurs en pont I11 à I14 (les convertisseurs I11 et I13 étant commandés ensemble et les interrupteurs I12 et I14 ensemble). La fréquence porteuse utilisée est égale à la fréquence utilisée dans le convertisseur principal et en phase avec celle-ci. Ce découpage permet l'obtention, aux bornes du transformateur, d'une tension analogue à la tension VP représentée sur la figure 7, sans ondulation résiduelle à la fréquence de découpage FD. Le secondaire du transformateur permet donc la reconstitution d'un signal sinusoïdal de sortie par commande des interrupteurs I5 à I8 à la même fréquence porteuse FP.

Il est avantageux que le temps de conduction des interrupteurs I11 à I14 soit modulé à l'intérieur d'une période de commande de fréquence FP afin que le circuit soit protégé en cas de surintensité et que la tension de sortie soit régulée. Ces propriétés peuvent être obtenues sans augmentation de la fréquence de commutation des transistors.

Le filtre F5 de sortie a un rôle analogue à celui du filtre F3 du circuit de la figure 8.

Bien entendu, le montage en pont formé par les interrupteurs I11 à I14 de la figure 9 peut être remplacé par un circuit en demi-pont ou du type push-pull, d'une manière analogue à celle qu'on a décrite précédemment en référence aux figures 2 et 3.

12

REVENDICATIONS

1. Convertisseur de courant destiné à transformer un courant continu en un courant alternatif à une fréquence de sortie (FS), du type qui comprend :

- un premier circuit (11) destiné à découper le courant continu à une fréquence (FP) très supérieure à la fréquence de sortie (FS) et à moduler la tension à une fréquence double de la fréquence de sortie (FS) par découpage du courant à une fréquence de découpage (FD) très supérieure à la fréquence porteuse,

- un transformateur (12) destiné à recevoir, à son primaire, le courant découpé et modulé du premier circuit (11) et à travailler à la fréquence porteuse (FP), le rapport de transformation étant tel que le secondaire transmet un courant dont la tension a une valeur efficace ou moyenne voulue, et

- un second circuit (13) destiné à recevoir le courant du secondaire du transformateur (12) et à former un courant ayant une tension sinusoïdale à la fréquence voulue de sortie, caractérisé en ce que le second circuit (13) comporte des interrupteurs bidirectionnels (I5-I8) commandés à la fréquence porteuse (FP), si bien que le convertisseur est réversible et assure aussi la transformation d'un courant alternatif à la fréquence de sortie (FS) en un courant continu.

2. Convertisseur selon la revendication 1, caractérisé en ce qu'il comporte en outre un générateur (15) de signaux à la fréquence porteuse (FP), destiné à alimenter le premier et le second circuit (11-13) afin que la commande des interrupteurs bidirectionnels (I5-I8) soit en phase avec la commande du primaire du transformateur (12) à la fréquence porteuse (FP).

3. Convertisseur selon la revendication 2, caractérisé en ce que le premier circuit (11) comporte des interrupteurs électroniques (I1-I4) commandés à la fréquence porteuse (FP).

4. Convertisseur selon l'une quelconque des revendications précédentes, caractérisé en ce qu'il comporte en outre un générateur (14) de signaux de découpage à la fréquence de découpage (FD) et destiné à alimenter le premier circuit (11).

5. Convertisseur selon l'une quelconque des revendications précédentes, caractérisé en ce que le premier circuit (11) comprend des interrupteurs électroniques disposés suivant un montage en pont, en demi-pont ou push-pull.

6. Convertisseur selon l'une quelconque des revendications précédentes, caractérisé en ce que les interrupteurs bidirectionnels commandés (I5-I8) du second circuit (13) forment un montage de reconstitution à double alternance ou à point milieu.

7. Alimentation de secours, caractérisée en ce qu'elle comprend :

- un interrupteur (I10) monté entre une entrée d'un courant alternatif et une sortie,

- un circuit logique de commande (LS) destiné à manoeuvrer l'interrupteur lorsqu'il détecte une défaillance du courant à l'entrée,

- un convertisseur (CV) selon l'une quelconque des revendications précédentes, associé à une batterie d'accumulateurs, et

- un circuit de régulation (RG) du convertisseur, destiné à recevoir le courant de sortie du convertisseur.

8. Alimentation de secours, caractérisée en ce qu'elle comprend :

- un pont redresseur formé de quatre diodes (D1 à D4),

- un pont à transistors formé de quatre transistors (I11 à I14) dont les points milieux alimentent un enroulement supplémentaire d'un transformateur appartenant à un convertisseur selon l'une quelconque des revendications 1 à 6,

- des circuits de logique et de régulation.

FIG. 1

FIG. 2

fig 3

FIG.4 a    Fig.4b    Fig.4c    Fig 4d    FIG.5

FIG.6a    FIG.5 b

FIG.7

FIG.8

FIG.9

Office européen
des brevets

**RAPPORT DE RECHERCHE EUROPEENNE**

0165843
Numéro de la demande

EP 85 40 0968

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| A | US-A-4 399 499 (BUTCHER et al.) <br> * Colonne 2, lignes 20-52 * | 1-3,5 | H 02 M 7/797 <br> H 02 J 9/06 |
| A | US-A-4 339 791 (MITCHELL) <br><br> * Colonne 2, lignes 5-22; colonne 3, ligne 51 - colonne 4, ligne 53 * | 1,3,5, 6 | |
| D,A | EP-A-0 010 900 (HICKS) <br><br> * Page 2, ligne 19 - page 4, ligne 34 * | 1,3,5, 6 | |
| A | DE-A-2 728 377 (SIEMENS) <br> * Page 6, ligne 26 - page 10, ligne 34 * | 1,3 | |
| A | EP-A-0 028 591 (BRING) <br> * Pages 4,5 * | 1,7 | **DOMAINES TECHNIQUES RECHERCHES (Int. Cl.4)** <br><br> H 02 M <br> H 02 J |
| A | US-A-4 401 895 (PETKOVSEK) <br> * Colonne 2, lignes 23-68 * | 7 | |

Le présent rapport de recherche a été établi pour toutes les revendications

| Lieu de la recherche <br> LA HAYE | Date d'achèvement de la recherche <br> 06-08-1985 | Examinateur <br> KERN H. |
|---|---|---|